# EUROPÄISCHE PATENTSCHRIFT

(11) **EP 2 290 735 B1**
(45) Veröffentlichungstag und Bekanntmachung des Hinweises auf die Patenterteilung: **07.11.2012**
(21) Anmeldenummer: 10009875.5
(22) Anmeldetag: 21.09.2004
(51) Int. Cl.: H01M 10/0525, H01M 2/36, H01M 10/056, H01M 10/0563

(54) **Elektrochemische Batteriezelle**
ELECTROCHEMICAL BATTERY CELL
ÉLÉMENT DE BATTERIE ÉLECTROCHMIQUE

(30) Priorität: 23.09.2003 DE 10343862
(43) Veröffentlichungstag der Anmeldung: 02.03.2011
(62) Teilanmeldung aus: 04786822.9
(73) Patentinhaber: Fortu Intellectual Property AG, 6060 Sarnen (CH)
(72) Erfinder: Zinck, Laurent, 67470 Mothern (FR); Borck, Markus, 70567 Stuttgart (DE); Biollaz, Heide, 79761 Waldshut (DE); Ripp, Christiane, 76327 Pfinztal (DE); Hambitzer, Günther, 53115 Bonn (DE)
(74) Vertreter: Durm & Partner

(56) Entgegenhaltungen:
- EP-A- 0 468 942
- EP-A- 0 767 506
- WO-A-00/44061
- WO-A-00/79631
- WO-A-02/09213
- WO-A-03/077328
- DE-A1- 10 110 716
- DE-C1- 19 911 800
- US-A- 4 567 031
- US-A- 5 006 428
- US-A- 5 595 837
- US-A1- 2003 049 524
- PATENT ABSTRACTS OF JAPAN Bd. 008, Nr. 285 (E-287), 26. Dezember 1984 (1984-12-26) & JP 59, 149654, A, (KAO SEKKEN KK), 27. August 1984 (1984-08-27)

## Beschreibung

Die Erfindung betrifft ein Verfahren zur Herstellung einer elektrochemischen Batteriezelle mit einer negativen Elektrode (Kathode), einem ein Leitsalz enthaltenden Elektrolyt und einer positiven Elektrode (Anode). Insbesondere richtet sich die Erfindung auf Alkalimetalizellen, bei denen die aktive Masse ein Alkalimetall ist, das beim Laden der Zelle in und/oder an der negativen Elektrode gespeichert wird. Die aktive Masse kann jedoch auch ein anderes Metall, insbesondere ein Erdalkalimetall oder ein Metall der zweiten Gruppe des Periodensystems sein. Das Leitsalz des Elektrolyten besteht aus Kationen des Metalls, das die aktive Masse bildet und geeigneten Anionen. Im Falle von Alkalimetallzellen wird als Leitsalz vorzugsweise ein Tetrahalogenoaluminat des Alkalimetalls, beispielsweise LiAlCl₄, verwendet.

Nachfolgend wird beispielhaft überwiegend auf Alkalimetallzellen, insbesondere Lithiumzellen, Bezug genommen. Dies darf jedoch nicht als Einschränkung der allgemeinen Anwendbarkeit der Erfindung verstanden werden.

Typisch für derartige Zellen ist ein Aufbau aus mehreren übereinander angeordneten Schichten, deren Flächenabmessungen sehr viel größer als ihre Dicke ist. Sie haben etwa gleich große Flächenabmessungen und sind in der Zelle sandwichartig übereinander angeordnet. Gebräuchlich sind prismatische Zellen mit in der Regel quaderförmigem Gehäuse und geraden Schichten sowie zylindrische Zellen, in deren Innerem die Schichten rollenförmig gewickelt sind.

Übliche Zellen haben mindestens drei Schichten, nämlich die negative Elektrode, die positive Elektrode und einen Separator, der beide Elektroden elektrisch und mechanisch trennt. Er hat schwierige Aufgaben zu erfüllen:
- Er soll die elektrische Trennung von positiver und negativer Elektrode sichern, ohne die der Betrieb einer Batteriezelle nicht möglich ist.
- Er soll dazu beitragen, eine gleichmäßige Verteilung des flüssigen Elektrolyten zwischen den Elektroden sicherzustellen.
- Er soll eine mechanische Trennung des Anoden- und des Kathodenraums gewährleisten, andererseits aber sowohl den erforderlichen Elektrolyttransport als auch einen Gastransport zwischen den beiden Teilräumen der Zelle gewährleisten.
- Er soll Kurzschlüsse zwischen den Elektroden zuverlässig verhindern. Ein besonderes Problem ergibt sich dabei, wenn beim Laden der Zelle das aktive Metall auf deren Oberfläche abgeschieden wird.

Das zuletzt genannte Problem ist besonders kritisch, wenn die aktive Masse, insbesondere nach mehreren Lade- und Entladezyklen, nicht als glatte Schicht mit einer ebenen Oberfläche abgeschieden wird, sondern als abschnittsweise fadenförmige Gebilde. Speziell im Fall von Alkalimetallzellen, insbesondere Lithiumzellen, werden beim Laden der Zelle unverzweigte Fäden mit (für eine bestimmte Zelle mit einem bestimmten Elektrolyten) im wesentlichen gleichem Durchmesser gebildet, die zu Knäueln durcheinanderwachsen und als Whisker bezeichnet werden. Die Bildung der Whisker wird darauf zurückgeführt, dass sich an der Oberfläche des reaktiven aktiven Metalls infolge einer Selbstentladereaktion eine dünne Deckschicht bildet, die nicht vollständig gleichmäßig ist. Deswegen wächst das elektrolytisch abgeschiedene aktive Metall bevorzugt an den dünneren Stellen durch die Deckschicht durch und dann jeweils am Ende des Fadens weiter.

Durch die Bildung solcher fadenförmiger Gebilde wird der Separator mechanisch stark belastet. Andererseits ist die Auswahl geeigneter Materialien durch weitere Anforderungen beschränkt:
- Das Separatormaterial muss in der Zelle inert sein;
- es muss möglichst dünn sein, um eine hohe Energiedichte zu ermöglichen;
- die Leistungsdaten der Zelle und ihre Lebensdauer werden u.a. durch die Durchlässigkeit des Separators für die Elektrolytionen mitbestimmt;
- die Kosten des Separators müssen vertretbar sein.

Besonders wichtig ist ein perfekt funktionierender Separator in Lithium-Ionen-Zellen und Lithium-Polymer-Zellen. Wenn dort Lithium metallisch auf der Oberfläche der negativen Elektrode abgeschieden wird, darf das hochreaktive Metall keinesfalls in Kontakt mit der positiven Elektrode kommen, weil der aus einem solchen Kontakt resultierende Kurzschluss sofort zu einer unkontrollierten Reaktionsfolge führen würde, die als "thermal runaway" bezeichnet wird. Die organische Elektrolytlösung solcher Zellen würde unkontrolliert abbrennen oder sogar explodieren. Wegen dieser Risiken werden die genannten Zelltypen in der Regel nur in relativ kleinen Bauformen hergestellt. Außerdem werden zusätzliche, vor allem elektronische, Sicherheitsmaßnahmen ergriffen.

Bei den genannten Zelltypen ist die negative Elektrode üblicherweise als sogenannte "Insertionselektrode" ausgebildet. Dieser Begriff bezeichnet generell Elektroden, die das aktive Metall derartig in ihrem Inneren enthalten, dass es zum Austausch mit dem Elektrolyt beim Laden und Entladen der Zelle bereit ist. Bei Lithium-lonen- und Lithium-Polymer- Zellen ist die negative Elektrode eine Insertionselektrode auf Basis von Graphit, in deren Inneres beim Laden der Zelle Metallionen des Leitsalzes aufgenommen werden. Die Zelle soll nach Möglichkeit so betrieben werden, dass Betriebszustände vermieden werden, bei denen aktives Metall an der Oberfläche der Elektrode abgeschieden wird. Dies ist in der Praxis jedoch nur mit aufwendigen elektronischen Maßnahmen zu erreichen, durch die ein Überladen der Zelle sowie ein Laden mit relativ hohen (über einem für die jeweilige Zelle gültigen Grenzwert liegenden) Stromstärken zuverlässig vermieden wird. Die Elektronik muss extrem genau (Abschaltspannung beispielsweise 4,2 V ± 0,01 V) und extrem zuverlässig (höchstens ein Fehler auf 100 Millionen Stück) sein. Durch derartige Maßnahmen werden die Kosten wesentlich erhöht. Dennoch verbleiben gewisse Risiken.

Bei wiederaufladbaren elektrochemischen Batteriezelle, insbesondere Alkalimetallzellen und vor allem Lithiumzellen, soll ein möglichst hoher Sicherheitsstandard mit möglichst geringem Aufwand erreicht werden, wobei die vorteilhaften Eigenschaften des jeweiligen Zelltyps (im Falle von Lithiumzellen insbesondere deren unübertroffen hohe Energiedichte) in vollem Umfang erhalten bleiben oder sogar noch verbessert werden sollen.

Vor diesem Hintergrund schlägt die Erfindung ein einfaches und effektives Verfahren zur Herstellung einer elektrochemischen Batteriezelle mit den Merkmalen des Anspruchs 1 vor.

In der DE 19911800 C1 ist ein Verfahren und eine Vorrichtung zum Befüllen einer elektrochemischen Zelle beschrieben, mit dem die besonderen Probleme gelöst werden sollen, die beispielsweise mit auf SO₂-basierenden Elektrolyten verbunden sind. Derartige Elektrolyten stellen solvatisierte Salze dar, deren Lösungsmittel (SO₂) bei Raumtemperatur gasförmig ist. Zur Überwindung der damit verbundenen besonderen Probleme wird eine komplizierte Apparatur vorgeschlagen, bei der eine Kanüle gasdicht durch die Einlassöffnung der Batterie bis an den Elektrodenstapel herangeführt werden muss. Dadurch besteht die Gefahr, dass das Kanülenende den Elektrodenstapel beschädigt und einen internen Kurzschluss verursacht. Außerdem kann eine solche dünne Kanüle leicht durch auskristallisiertes Leitsalz verstopft werden. Zum Befüllen wird die Zelle evakuiert und nach Umlegen eines Ventils wird die Elektrolytlösung in die Zelle gesaugt. Dabei ist der große Druckunterschied zwischen Elektrolytlösung und Zellinnerem nachteilig. Das Lösungsmittel (SO₂) wird zu Beginn aus der Elektrolytlösung verdampft. Dadurch wird die Gefahr der Auskristallisation des Leitsalzes und damit einer Verstopfung der Befülleinrichtung zusätzlich erhöht.

Demgegenüber wird im Rahmen der Erfindung ein wesentlich einfacheres Verfahren vorgeschlagen. Dabei schließt das Einfüllen der Elektrolytlösung folgende Teilschritte ein:
- Der Innenraum des Gehäuses wird mit gasförmigem SO₂ gefüllt;
- eine Einfüllöffnung des Gehäuses wird gasdicht an ein Gefäß angeschlossen, das die Elektrolytlösung mit einem Anteil an SO₂ enthält, der so bemessen ist, dass das gasförmige SO₂ in der Elektrolytlösung begierig gelöst wird; und
- die Elektrolytlösung wird, getrieben durch den aus dem Lösungsvorgang resultierenden Unterdruck, in das Gehäuse einströmen gelassen.

Nähere Erläuterungen werden weiter unten auf Basis der Figuren gegeben. Das Verfahren ermöglicht auf einfache Weise eine vollständige Befüllung der Zelle mit einem auf SO₂ basierenden Elektrolyt.

Eine bevorzugte Ausführungsform betrifft ein Herstellungsverfahren für eine elektrochemische Batteriezelle, insbesondere einen innerhalb eines solchen Verfahrens stattfindenden Reinigungsschritt, bei dem eine Elektrode der Zelle dadurch für ihre Funktion optimiert wird, dass an der Elektrode gebundene OH⁻-Ionen entfernt werden. Dabei wird ein Reinigungsmittel, das eine mit OH⁻-Ionen reagierende erste Reinigungskomponente enthält, derartig mit der Elektrode in Kontakt gebracht, dass an ihr gebundene OH⁻-Ionen durch Reaktion mit der ersten Reinigungskomponente von der Elektrodenoberfläche gelöst werden, und Bestandteile des Reinigungsmittels oder Reaktionsprodukte, die die Funktion der Zelle stören könnten, von der Elektrode entfernt werden.

Die Erfindung bezieht sich insbesondere auf Batteriezellen, deren Elektrolyt auf SO₂ basiert. Als "auf SO₂ basierend" (SO₂ based) werden Elektrolyten bezeichnet, die SO₂ nicht nur als Zusatz in geringer Konzentration enthalten, sondern bei denen die Beweglichkeit der Ionen des Leitsalzes, das in dem Elektrolyten enthalten ist und den Ladungstransport bewirkt, zumindest teilweise durch das SO₂ gewährleistet wird. Weitere Informationen hierzu können der WO 00/79631 und den darin zitierten Dokumenten entnommen werden.

Für die Funktion von wasserfreien Batteriezellen, also insbesondere auch Zellen, die mit einem auf SO₂ basierenden Elektrolyten arbeiten, ist es sehr wichtig, dass in der Elektrodenstruktur vorhandene Wasserreste (sowohl molekulares Wasser als auch H⁺- und OH⁻-Ionen) vollständig entfernt werden. Dies stellt insbesondere bei Verwendung der zuvor erläuterten Insertionselektroden ein schwerwiegendes Problem dar.

Im Rahmen der Erfindung wurde festgestellt, dass die Gegenwart von chemisch gebundenem Wasser zu einer Passivierung der Elektroden führen kann, so dass die Elektrodenprozesse nur gehemmt ablaufen. Im Falle einer Insertionselektrode, insbesondere einer Alkalimetall-Interkalationselektrode (z.B. des aus der WO 00/79631 bekannten Typs metalloxidischer Interkalationsverbindungen), betrifft dies die Auslagerung des Alkalimetalls beim Laden der Zelle bzw. die Einlagerung beim Entladen. Die Passivierung führt zu einer Erhöhung des Innenwiderstandes der Zelle.

Nach den Feststellungen der Erfinder lässt sich die Passivierung darauf zurückführen, dass eine Reaktion der Oberflächenmoleküle der Elektrode mit Wasser (z.B. aus Luftfeuchtigkeit) zur Bildung einer Deckschicht führt, die ein Hydroxid des aktiven Metalls, im Falle eines Alkalimetalls A also eine Verbindung des Typs AOH, enthält. Selbst geringe Spuren von Wasser führen zur Ausbildung einer Hydroxid-Deckschicht. Nach dem Kenntnisstand der Erfinder kann die Bildung einer Deckschicht schon beim Herstellen von Elektroden, deren aktive Masse auf einer metalloxidischen Interkalationsverbindung, insbesondere LiCoO₂, basiert, kaum vermieden werden. Dies bezieht sich nicht nur auf die äußere Oberfläche der Elektrode, sondern (im gebräuchlichen Fall eines porösen Elektrodenmaterials) auch auf deren innere Oberfläche (in den Poren). Die Passivierung der Elektrode lässt sich durch Reaktion mit der Reinigungskomponente, die mit OH⁻-Ionen reagiert und hier als erste Reinigungskomponente bezeichnet wird, beseitigen. Die erste Reinigungskomponente wird ohne Beschränkung der Allgemeinheit nachfolgend auch als Aktivierungskomponente bezeichnet.

Mittels des beschriebenen Verfahrens erhält man eine Insertionselektrode, insbesondere eine Interkalationselektrode, deren Oberfläche im Wesentlichen frei von OH⁻-Ionen ist. Vorzugsweise ist die Elektrode auch im Wesentlichen frei von H⁺-Ionen. Dabei ist "im Wesentlichen frei von OH⁻-Ionen bzw. H⁺-Ionen" dahingehend zu verstehen, dass die mit dem Vorhandensein der Ionen verbundene Passivierung der Elektrode bzw. der resultierende Kapazitätsverlust nicht in einem solchen Ausmaß vorhanden ist, dass die praktische Funktion der Elektrode in einer Batteriezelle beeinträchtigt wird. Wie weiter unten noch näher erläutert wird, führt die Passivierung zu einer kontinuierlichen Erhöhung des Innenwiderstandes der Zelle während der Lade- und Entladezyklen. Die diesbezüglichen Eigenschaften der Elektrode lassen sich beispielsweise mittels zyklischer Voltamogramme beobachten, wie ebenfalls weiter unten noch näher erläutert wird. Bevorzugt wird die Freiheit der Oberfläche der aktiven Masse von Hydroxid-Ionen durch das vorstehend beschriebene Verfahren mittels der ersten Reinigungskomponente erreicht.

Im Rahmen der Erfindung wurde festgestellt, dass Insertionselektroden der hier diskutierten Art einen Gehalt an chemisch gebundenem Wasser in der Größenordnung von 10000 ppm (d.h. 1 Gew% H₂O bezogen auf die elektrochemisch aktive Elektrodenmasse, insbesondere LiCoO₂) haben. Eine erfindungsgemäße optimierte Elektrode hat einen Wassergehalt von höchstens 5000 ppm, bevorzugt höchstens 1000 ppm, besonders bevorzugt höchstens 100 ppm und ganz besonders bevorzugt höchstens 10 ppm.

Als besonders geeignete erste Reinigungskomponente hat sich eine protonenfreie Lewis-Säure erwiesen. Mit diesem Begriff wird eine Substanz bezeichnet, die Säureeigenschaften im Sinne der von G.N. Lewis gegebenen Definition hat (also ein Elektronenakzeptor ist), jedoch kein H⁺-Ion enthält. Bevorzugte Beispiele von Lewis-Säuren sind AlF₃, BF₃, CO₂, CS₂ und GaCl₃. Generell lässt sich die Eignung einer Lewis-Säure für die Zwecke der Erfindung experimentell erproben.

Eine Vorauswahl geeigneter Lewis-Säuren kann aufgrund deren Stärke erfolgen, die wiederum von der Differenz der Elektronegativitätswerte der die Säure bildenden Atome (beispielsweise Al und F im Fall von AlF₃) abgeschätzt werden kann. Je größer diese Differenz ist, desto stärker ist die Lewis-Säure.

Das Reinigungsmittel ist in der Regel eine Flüssigkeit, die die erste Komponente in einem geeigneten Lösungsmittel enthält. Als Lösungsmittel sind insbesondere aprotische Flüssigkeiten, beispielsweise Tetrachlorkohlenstoff (CCl₄) geeignet. Die erforderliche Wasserfreiheit des Lösungsmittels kann beispielsweise mittels eines Molsiebs, insbesondere auf der Basis von Metallaluminosilikat mit großer Oberfläche, erreicht werden. Grundsätzlich kann als Lösungsmittel auch ein Gas oder überkritisches Fluid, insbesondere auf der Grundlage von überkritischem CO₂, verwendet werden. Die Reinigungskomponente kann auch selbst als Fluid (z.B. über kritisches CO₂) oder Gas (z.B. CS₂) vorliegen. In solchen Fällen muss das Reinigungsmittel selbstverständlich kein zusätzliches Lösungsmittel enthalten.

Die Konzentration der Aktivierungskomponente in dem Reinigungsmittel sollte möglichst hoch sein, wobei im Falle einer Lösung eine Obergrenze aus der Löslichkeit der Aktivierungskomponente resultiert. In der Regel ist eine gesättigte Lösung bevorzugt. Grundsätzlich ist eine Aktivierungswirkung jedoch auch schon bei geringeren Konzentrationen möglich. Die geeignete Konzentration muss im Einzelfall in Verbindung mit der Dauer der Reinigungsbehandlung experimentell bestimmt werden und hängt selbstverständlich auch von der verwendeten Lewis-Säure ab.

Das Reinigungsmittel muss in der Praxis folgende Bedingungen erfüllen:
- Sofern das Verfahren derartig angelegt ist, dass mindestens ein Teil des Reinigungsmittels bei der Herstellung der Zelle in der Insertionselektrode verbleibt, muss das Reinigungsmittel insoweit für die Funktion der Zelle unschädlich sein. Schädliche Bestandteile müssen sich leicht und vollständig entfernen lassen.
- Das Reinigungsmittel muss mit dem Elektrodenmaterial verträglich sein. Insbesondere darf es keine dessen Funktion störende Reaktion verursachen.

Gemäß einer bevorzugten Ausführungsform wird zur Optimierung von Insertionselektroden in dem Herstellungsverfahren eine zweite Reinigungskomponente verwendet, die mit H⁺-Ionen reagiert und in einem Reinigungsmittel derartig mit der Insertionselektrode in Kontakt gebracht wird, dass in ihr gebundene H⁺-Ionen durch Reaktion mit der zweiten Reinigungskomponente aus dem Inneren der Elektrode gelöst werden. Im Rahmen der Erfindung wurde festgestellt, dass die Eigenschaften von Insertionselektroden, insbesondere Interkalationselektroden der weiter oben erläuterten Art, auch dadurch beeinträchtigt werden, dass H⁺-Ionen (Protonen) an das Elektrodenmaterial binden. Die Protonen tauschen mit den Alkalimetallionen der Insertionselektrode aus, reduzieren dadurch deren Aufnahmefähigkeit für aktives Metall (insbesondere Alkalimetall) und damit die elektrische Kapazität der Zelle. Mittels der zweiten Reinigungskomponente werden die Protonen aus der Insertionselektrode extrahiert. Dadurch wird ihre Aufnahmekapazität und damit auch die elektrische Speicherkapazität der Zelle verbessert.

Als zweite Reinigungskomponente eignet sich insbesondere ein Salz, das mit den in der Insertionselektrode gebundenen Protonen eine Ionenaustauschreaktion eingeht. Geeignete Beispiele sind Halogenide, insbesondere Fluoride eines Alkalimetalls, Erdalkalimetalls oder eines Metalls der dritten Hauptgruppe des Periodensystems. Ohne Beschränkung der Allgemeinheit wird nachfolgend für die zweite Reinigungskomponente auch die Bezeichnung "Reinigungssalz" verwendet.

Hinsichtlich beider Reinigungskomponenten und deren Verwendung in dem Herstellungsverfahren sind verschiedene Varianten möglich. Beispielsweise kann mindestens eine Teilmenge des Reinigungssalzes schon bei der Herstellung der Elektrodenmasse in diese und damit in die Elektrode eingebracht werden. Es kann auch mit einer Verfahrensführung gearbeitet werden, bei der die erste und/oder die zweite Reinigungskomponente nicht unmittelbar in das Reinigungsmittel eingebracht wird. Vielmehr besteht selbstverständlich auch die Möglichkeit, dass diese Komponenten in situ mittels geeigneter Vorreaktionen gebildet werden. Beispielhaft genannt seien Salze, die ein Reinigungssalz dadurch bilden können, dass sie Halogenide, bevorzugt Fluoride abspalten, insbesondere Salze der Anionen PF₆⁻, AsF₆⁻, BF₄⁻ und AlF₄⁻. Auch organische Salze können sich als Ausgangsprodukte zur in situ-Bildung eines Reinigungssalzes eignen.

Gemäß einer bevorzugten Ausgestaltung dieses bevorzugten Herstellungsverfahrens erfolgt die Entfernung der OH⁻ und H⁺-Ionen zweistufig in zwei getrennten Schritten, bei denen jeweils ein getrenntes (vorzugsweise auch unterschiedliches) Lösungsmittel eingesetzt wird.

Insbesondere kann in einer ersten Stufe die Insertionselektrode mit einem Reinigungsmittel kontaktiert werden, das eine protonenfreie Lewis-Säure in einem leicht flüchtigen aprotischen Lösungsmittel, beispielsweise CCl₄ enthält. Dieses Reinigungsmittel wird so lange einwirken gelassen, bis die OH⁻-Ionen von der Elektrode in das Reinigungsmittel übergegangen sind. Danach wird es entfernt.

In einer zweiten Stufe wird die Elektrode mit einem zweiten Reinigungsmittel in Kontakt gebracht, das die zweite Reinigungskomponente enthält. Nach Ablauf der für den Übergang der Protonen aus der Elektrode in das Reinigungsmittel erforderlichen Reaktion kann auch das zweite Reinigungsmittel wieder entfernt werden. Die resultierende optimierte Elektrode muss selbstverständlich in wasserfreier Atmosphäre weiterverarbeitet werden, damit ihre Eigenschaften nicht erneut durch Aufnahme von Wasser und dessen Bestandteilen OH⁻ und H⁺ verschlechtert werden.

Grundsätzlich kann als Lösungsmittel einer Reinigungsflüssigkeit auch der für die jeweilige Zelle vorgesehene Elektrolyt verwendet werden. Insbesondere kann es zweckmäßig sein, ein geeignetes Reinigungssalz zusammen mit dem Elektrolyt in die Zelle einzubringen. Da die durch Ionenaustausch mit den in der Insertionselektrode enthaltenen Protonen gebildeten Verbindungen, beispielsweise HF und HCl, flüchtig sind, entweichen sie von selbst, wobei man dies durch Anwendung von Unterdruck (Evakuieren) beschleunigen kann. In einem solchen Fall muss die Reinigungsflüssigkeit nicht aus der Zelle entfernt werden, sondern bleibt darin als Elektrolyt, wobei verbliebene Reste des Reinigungssalzes weitere positive Wirkungen (neben der Extraktion der H⁺-Ionen aus der Elektrode) haben.

Die Behandlung der Elektroden mit den Reinigungsmitteln kann grundsätzlich sowohl innerhalb als auch außerhalb der Zelle erfolgen. Im Falle des zweistufigen Verfahrens kann es insbesondere zweckmäßig sein, die erste Verfahrensstufe (Entfernen der OH⁻-Ionen) außerhalb der Zelle durchzuführen, danach die teilweise optimierte Elektrode in die Zelle einzubauen und die zweite Reinigungsstufe (Extraktion der H⁺-Ionen) in der Zelle durchzuführen.

Die Erfindung hat sich insbesondere bei Zellkonstruktionen bewährt, bei denen die negative Elektrode so ausgebildet ist, dass beim Laden der Zelle positive Metallionen des Leitsalzes in ihrem Inneren aufgenommen werden. Bei derartigen Konstruktionen kommt es beim normalen Laden der Zelle zunächst nicht zu einer Abscheidung von aktivem Metall auf der Elektrodenoberfläche, sondern die Speicherung des aktiven Metalls während des Ladevorgangs findet im Inneren einer Struktur statt, die Bestandteil der negativen Elektrode ist. Zelltypen, für die diese Bedingung gilt, werden hier allgemein als "Insertionselektrode" bezeichnet. Als Insertionselektrode in diesem allgemeinen Sinne ist auch eine Konstruktion mit einem flächigen, elektronisch leitendem Substrat und einer damit verbundenen Abscheideschicht, in deren Poren die aktive Masse beim Laden aufgenommen wird, anzusehen. Eine solche Konstruktion ist aus der WO 02/09213 bekannt, auf die insoweit Bezug genommen wird.

Gemäß einer weiteren Variante erfolgt die Aufnahme der positiven Metallionen in das Innere einer elektrisch leitfähigen Elektrodenmasse, die Bestandteil der negativen Elektrode ist. Ein wichtiges Beispiel einer solchen elektrisch leitfähigen Elektrodenmasse sind kohlenstoffhaltige Elektroden, insbesondere Graphitelektroden, wie sie auch für Lithium-Ionen-Zellen verwendet werden. Dabei erfolgt die Speicherung des Lithiums während des Ladens nicht durch Ablagerung in porösen Hohlräumen, sondern durch Einlagerung in die Gitterstruktur der elektrisch leitfähigen Elektrodenmasse. Neben der erwähnten Graphitelektroden können als Beispiele solcher Elektrodenmaterialien Lithiuminterkalationselektroden auf Basis von Li₄Ti₅O₁₂ oder Legierungselektroden genannt werden.

Bei derartigen Zellkonstruktionen muss zwingend eine gesonderte poröse Isolatorschicht vorhanden sein, um einen unmittelbaren elektrischen Kontakt und damit Kurzschluss zwischen der negativen und der positiven Elektrode (d.h. deren jeweils leitfähigen Elektrodenmassen) zu verhindern. Eine solche Gestaltung wird nachfolgend anhand der Figuren noch näher erläutert.

Die Erfindung wird nachfolgend anhand der Figuren näher erläutert. Die dargestellten und beschriebenen Besonderheiten können einzeln oder in Kombination verwendet werden, um bevorzugte Ausgestaltungen der Erfindung zu schaffen. Es zeigen:
- Fig. 1: einen schematischen Querschnitt durch eine Batteriezelle;
- Fig. 2: eine perspektivische Prinzipdarstellung zur Erläuterung der Anordnung und der Größenverhältnisse der Elektrodenmassen bei einer beispielhaften Ausführungsform der Erfindung;
- Fig.3: eine perspektivische Prinzipdarstellung zur Erläuterung eines Verfahrens zur experimentellen Auswahl eines geeigneten Materials für eine poröse Isolatorschicht;
- Fig. 4: eine graphische Darstellung von Messergebnissen;
- Fig. 5 und Fig. 6: zyklische Voltamogramme aus der experimentellen Erprobung der Erfindung;
- Fig. 7: eine zusammenfassende Darstellung von aufgrund von zyklischen Voltamogrammen gemäß den Figuren 5 und 6 gewonnenen Ergebnissen;
- Fig. 8: eine graphische Darstellung der Entladekapazität von Zellen in Abhängigkeit von der Zahl der Lade- und Entladezyklen;
- Fig. 9: eine Prinzipskizze zur Erläuterung des Füllverfahrens der Erfindung;

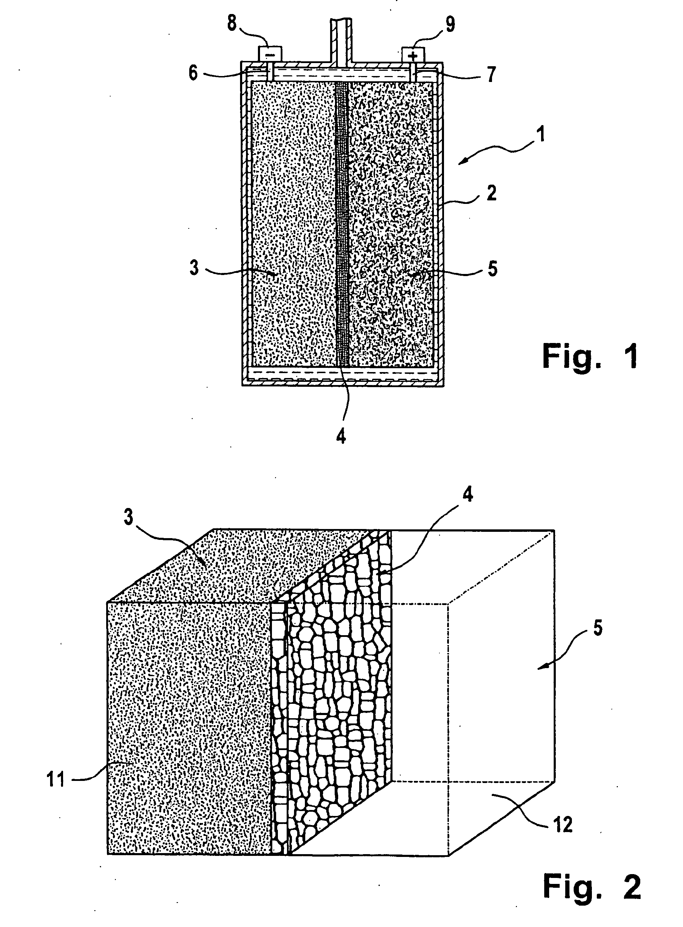

Figur 1 zeigt schematisch eine elektrochemische Batteriezelle 1 mit einem Gehäuse 2, in deren Innenraum sich eine Sandwich-Anordnung von Schichten befindet, nämlich eine negative Elektrode 3, eine poröse Isolationsschicht 4 und eine positive Elektrode 5. Die Elektroden 3,5 sind über elektrische Ableiter 6,7 mit Anschlusskontakten 8,9 verbunden, über die die Zelle zum Laden mit einem Ladegerät bzw. bei der Verwendung mit einem Stromverbraucher verbunden werden kann.

Die Konstruktion der Zelle ist weitgehend konventionell und muss nicht näher erläutert werden. Eine wichtige Besonderheit besteht darin, dass zwischen den Elektroden 3,5 kein Separator, sondern eine poröse Isolatorschicht 4 vorhanden ist, die das Durchwachsen von aktivem Metall, das beim Laden der Zelle an der der positiven Elektrode 5 zugewandten Oberfläche der negativen Elektrode abgeschieden wird, durch die Isolatorschicht 4 hindurch begünstigt. Dabei kommt es zu lokalen Kontakten zwischen dem aktiven Metall und der der negativen Elektrode 3 zugewandten Oberfläche der positiven Elektrode 5 und infolgedessen finden lokale Kurzschlüsse statt.

Figur 1 und noch deutlicher Figur 2 zeigen, dass die Elektroden 3,5 vorzugsweise sehr viel dicker als die Isolatorschicht 4 sind. Die Isolatorschicht 4 hat bevorzugt eine Dicke von maximal 100 µm, während die Elektroden eine Dicke von typischerweise etwa 0,1 mm bis 2 mm haben. Diese Zahlenwerte zeigen, dass die Darstellung in den Figuren zwar hinsichtlich der Dickenrelationen etwa maßstäblich ist, nicht jedoch hinsichtlich der absoluten Dicke der Schichten. Vielmehr enthält eine kommerzielle Batterie in der Regel ein Paket aus einer Mehrzahl dünner Schichten. Insoweit unterscheidet sich die Erfindung, abgesehen von den hier erläuterten Besonderheiten, nicht von üblichen Batterien.

Die relativ große Dicke der Elektroden 3 und 5 hängt damit zusammen, dass bei der dargestellten bevorzugten Ausführungsform beide Elektroden eine elektrisch leitfähige Elektrodenmasse 11 bzw. 12 aufweisen, in die die Ionen des aktiven Metalls beim Laden bzw. Entladen der Zelle aufgenommen werden. Geeignete Materialien wurden bereits genannt. Besonders bevorzugt ist die negative Elektrode 3 eine Graphitelektrode, wobei ihre (bevorzugt poröse) Elektrodenmasse 11 weitgehend aus Kohlenstoff besteht. Die positive Elektrode ist bevorzugt eine Interkalationselektrode, deren Elektrodenmasse 12 aus Lithiumkobaltoxid gebildet ist und bevorzugt ebenfalls eine poröse Struktur hat. Im entladenen Zustand ist das Lithium im Inneren der positiven Elektrode gespeichert. Beim Laden wandern Lithiumionen durch die poröse Isolatorschicht 4 in die Elektrodenmasse 11 der negativen Elektrode. Bei bestimmten Betriebszuständen findet, wie weiter oben erläutert, darüber hinaus eine Abscheidung des aktiven Metalls an der Grenzfläche zwischen der Elektrodenmasse 11 und der porösen Isolatorschicht 4 statt. Dabei dringt das aktive Metall in die Poren der Isolatorschicht 4 ein und wächst durch die poröse Isolatorschicht 4 hindurch schließlich bis an die Grenzfläche zwischen der positiven Elektrode 5 und der Isolatorschicht 4, wo die erläuterten lokalen Kurzschlüsse stattfinden.

In den Figuren 1 und 2 nicht dargestellt ist die erforderliche elektrische Verbindung zwischen den Elektrodenmassen 11,12 und den Ableitern 6,7. Sie wird durch metallene Ableitelemente gewährleistet, die in üblicher Weise mit den Elektrodenmassen 11,12 verbunden sein können. In Frage kommen beispielsweise dünne Ableitbleche auf der von dem porösen Isolator 4 abgewandten Oberfläche der Elektrodenmassen 11 und 12, aber auch poröse Metallstrukturen, beispielsweise in Form von Metallschäumen, in die die Elektrodenmasse partiell oder vollständig eingearbeitet ist. Auch insofern ist keine nähere Erläuterung erforderlich, weil derartige Konstruktionen aus dem Stand der Technik bekannt sind.

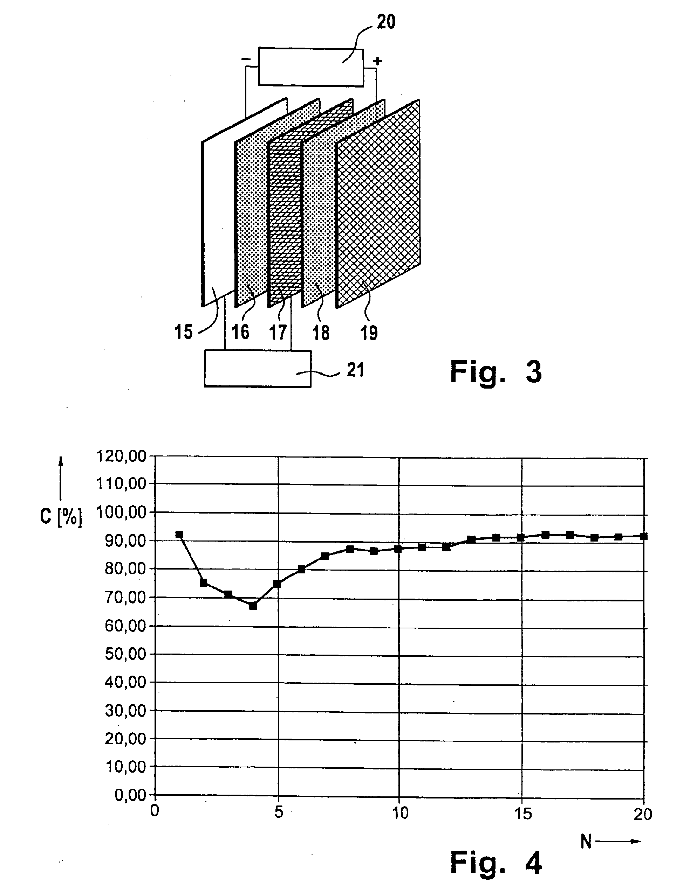

Wie weiter oben erläutert wurde, können die Konstruktionsmerkmale der porösen Isolatorschicht 4, durch die erforderlichen Eigenschaften (Durchlässigkeit für an der negativen Elektrode abgeschiedene aktive Masse, aber Sicherstellung von lokal begrenzten Kurzschlüssen) erreicht werden, nicht in allgemein verbindlichen Werten (beispielsweise hinsichtlich der Porosität und der Strukturbestandteile) angegeben werden. Die Eignung eines für die Isolatorschicht vorgesehenen Materials für eine bestimmte Zelle lässt sich jedoch experimentell leicht prüfen. Ein geeigneter Experimentalaufbau ist in Figur 3 stark schematisiert dargestellt. Er besteht aus folgender Schichtenfolge:
Negative Elektrode 15 aus Ni-Metall; geeignet ist sowohl eine Metallfolie als auch ein Schaum- oder Streckmetall aus Nickel.
Testmaterial 16: auf seine Eignung für die Isolatorschicht 4 zu untersuchendes Material
Hilfselektrode 17 aus Ni-Metall; sie muss flüssigkeitsdurchlässig sein und kann beispielsweise aus Streckmetall oder perforiertem Blech bestehen.
Separator 18: Geeignet ist ein übliches Separatormaterial; in dem Experimentalaufbau kommt es nur auf dessen elektrisch isolierende Eigenschaften bei gleichzeitiger Durchlässigkeit für den Elektrolyt an.

### Positive Elektrode 19: LiCoO₂ in Ni-Schaum

Die Schichten werden aufeinander gestapelt und mittels eines nicht dargestellten Rahmens zusammengepresst. Der gesamte Aufbau wird in eine auf SO₂ basierende Elektrolytlösung getaucht, deren Zusammensetzung der Elektrolytlösung der geplanten Zelle entspricht.

Die dargestellte Experimentalzelle wird mittels eines Ladegerätes 20 geladen, wobei (wie zuvor für die Zelle der Figuren 1 und 2 beschrieben) Lithium aus der positiven Elektrode 19 ausgelagert wird und sich in der negativen Elektrode abscheidet. Während des Ladevorgangs wird die Potentialdifferenz zwischen der negativen Elektrode und der Hilfselektrode mittels eines Spannungsmessgerätes 21 überwacht. Sie beträgt normalerweise 3,3 Volt (Spannung eines Li-Ni-Elementes). Wenn Lithium durch die Isolatorschicht 16 zu der Hilfselektrode 17 durchwächst, führt dies zu einer Verringerung der Potentialdifferenz. Zu diesem Zeitpunkt wird die Messung beendet und die Experimentalzelle auseinandergebaut. durch optische Untersuchung der Isolatorschicht (auf der der Hilfselektrode 17 zugewandten Seite) kann die Art des Lithiumwachstums festgestellt werden. Die Stellen, an denen das Lithium durchgewachsen ist, sowie die eventuellen Ansammlungen von Lithium, sind gut zu erkennen. Somit lässt sich feststellen, ob das Lithium wie gewünscht die zu untersuchende Schicht 16 nur an lokal begrenzten Stellen durchdringt und sich demzufolge als poröse Isolatorschicht für die Erfindung eignet.

Figur 4 zeigt Ergebnisse der experimentellen Erprobung einer separatorlosen Messzelle. Im konkreten Fall hatte die Zelle eine positive Elektrode aus LiCoO₂ und eine negative Elektrode mit unmittelbarer Abscheidung von metallischem Lithium in eine poröse Struktur aus Siliciumcarbid, die in unmittelbarem Kontakt zu der Elektrodenmasse der positiven Elektrode stand. Als Elektrolyt wurde LiAlCl₄ x 1,5 SO₂ verwendet.

Aufgetragen ist die Kapazität C der Zelle in Prozent der Nennkapazität gegenüber der Zahl N der Lade- und Entladezyklen. Nach einem anfänglichen Kapazitätsverlust durch strukturelle Inhomogenitäten der negativen Elektrode stabilisierte sich die Kapazität auf 90 %. Dies zeigt die Funktionstüchtigkeit der separatorlosen Konstruktion.

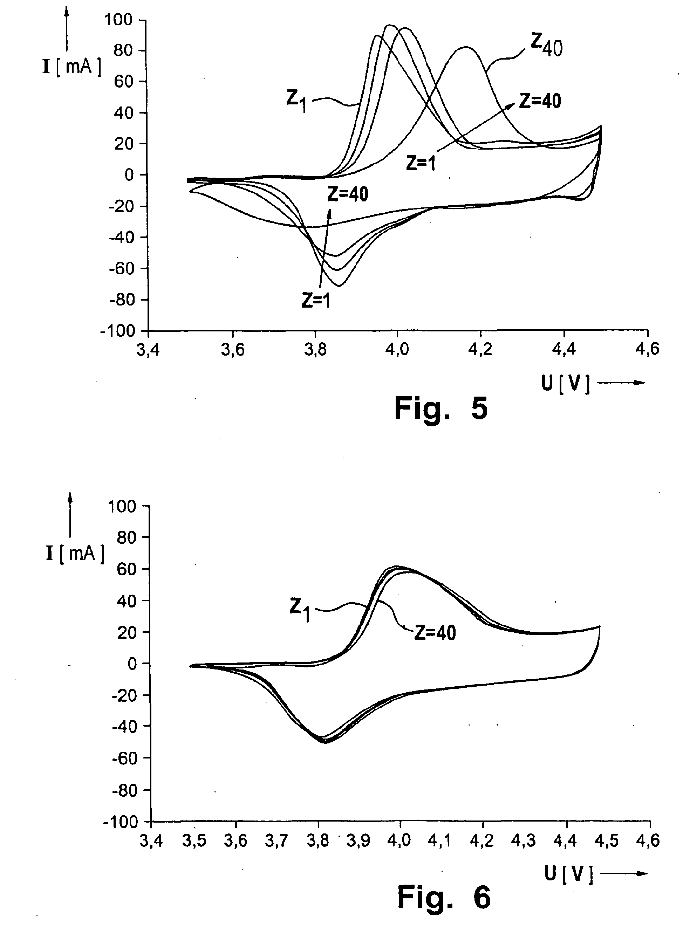

Die Figuren 5 bis 8 zeigen Ergebnisse, die bei der experimentellen Erprobung einer bevorzugten Ausführungsform der Erfindung gewonnen wurden. Dabei wurden positive Elektroden, die erfindungsgemäß optimiert worden waren, mit nicht optimierten Elektroden verglichen. Der Versuchsaufbau hatte folgende Merkmale:
Geometrische Elektrodenfläche: 1 cm²
Elektrodenkapazität: 40 mAh
Elektrolytlösung: LiAlCl₄ x 1,5 SO₂
Elektrodenmaterial: LiCoO₂

In einer gebräuchlichen Experimentalzelle ("E-Zelle" mit Referenzelektrode zur stromlosen Messung des Potentials) wurden Zyklen durchgeführt, bei denen die Spannung zwischen 3,5 V und 4,5 V mit einer Durchlaufgeschwindigkeit von 0,2 mV/s geändert wurde. Die Figuren 5 und 6 zeigen zyklische Voltamogramme, die dabei einerseits mit einer nicht erfindungsgemäß optimierten Elektrode und andererseits mit einer erfindungsgemäß optimierten Elektrode gewonnen wurden. Aufgetragen ist die gemessene Stromstärke I in mA gegen die an die Zelle angelegte Spannung υ in V gegen die Li/Li⁺-Halbzelle. Dargestellt sind jeweils vier Zyklen, darunter der erste Zyklus Z₁ und der letzte Zyklus Z₄₀.

Bei der Zelle mit der nicht erfindungsgemäß optimierten positiven Elektrode zeigt Figur 5 eine deutliche Veränderung des zyklischen Voltamogramms, die vor allem dadurch charakterisiert ist, dass sich die Position des aniodischen Peaks zu größeren Spannungen verschiebt. Während er bei dem ersten Zyklus noch deutlich unter 4 V liegt, liegt er bei dem vierzigsten Zyklus nahe bei 4,2 V. Dies entspricht einem Anstieg des Innenwiderstandes der Zelle, der nach der Erkenntnis der Erfinder auf die Passivierung der positiven Elektrode zurückzuführen ist.

Die in Figur 6 dargestellten Ergebnisse zeigen, dass die Optimierung der Elektrode dazu führt, dass sich das zyklische Voltamogramm während vierzig Zyklen praktisch nicht ändert: Die elektrischen Werte der Zelle, insbesondere ihr Innenwiderstand, bleiben konstant.

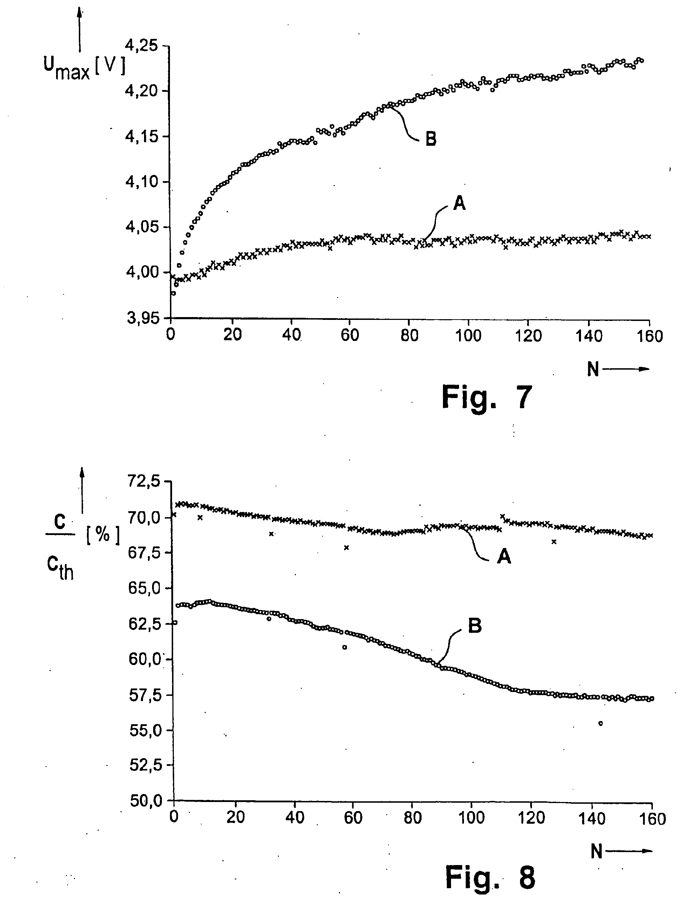

In Figur 7 sind diese Ergebnisse nochmals zusammenfassend dargestellt. Hier ist für Zellen mit erfindungsgemäß optimierter Elektrode (Kurve A) und für Zellen mit nicht optimierter Elektrode (Kurve B) die Änderung des Maximums des Peaks (Uₘₐₓ in Volt) gegen die Zahl der Zyklen dargestellt, wobei in diesem Fall mehr als 150 Zyklen durchgeführt wurden. Auch diese Darstellung zeigt, dass sich ohne die erfindungsgemäße Elektrodenoptimierung die Peaklage und damit der Innenwiderstand der Zelle stetig ändert, während sie bei Verwendung einer erfindungsgemäß optimierten Elektrode nahezu konstant bleibt.

Figur 8 zeigt für eine Zelle mit optimierter Elektrode (Kurve A) und eine Zelle mit nicht optimierter Elektrode (Kurve B) die Abhängigkeit der elektrischen Entladekapazität (in % der theoretischen Kapazität von der Zahl N der Lade- und Entladezyklen). Auch diese Kenngröße wird durch die Erfindung wesentlich verbessert: Einerseits ist die Anfangskapazität um etwa 7% höher, andererseits ist die mit dem wiederholten Laden und Entladen der Zelle verbundene Kapazitätsabnahme wesentlich geringer.

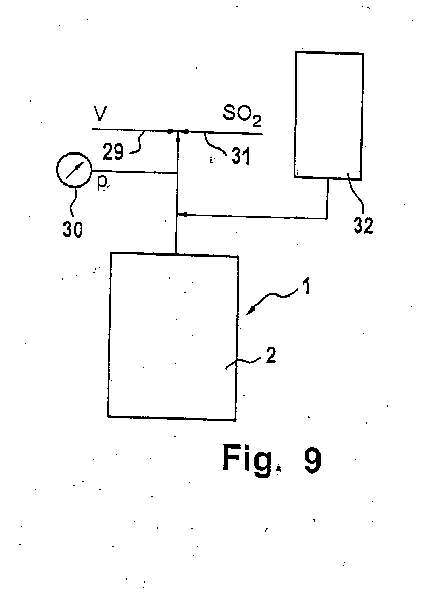

Figur 9 verdeutlicht das Füllen der Zelle mit Elektrolytlösung gemäß der Erfindung. In dem Gehäuse 2 der Zelle 1 befinden sich zu diesem Zeitpunkt bereits die Elektroden und die poröse Isolatorschicht, wie beispielhaft in Figur 1 dargestellt. Der Füllvorgang läuft wie folgt ab:
- Zunächst wird das Gehäuse 2 der Zelle 1 über die Leitung 29 evakuiert, der Vorgang kann mit einem Druckmessgerät 30 kontrolliert werden. Dann wird über die Leitung 31 gasförmiges SO₂ zugeführt, so dass der Innenraum des Gehäuses 2 mit gasförmigem SO₂ gefüllt wird.
- Danach erfolgt die Füllung mit einer Elektrolytlösung, die in einem Behälter 32 vorrätig gehalten wird. Da sie relativ arm an SO₂ ist, wird das in der Zelle 1 vorhandene gasförmige Schwefeldioxid nach Öffnen der Verbindung zwischen dem Gehäuse 2 und dem Behälter 32 begierig in der Elektrolytlösung gelöst. Mit anderen Worten findet eine schwach exotherme Reaktion mit der

Elektrolytlösung statt. Dadurch wird die Gasmenge in dem Gehäuse 2 vermindert. Es entsteht ein Unterdruck in der Zelle 1, durch den weiterer Elektrolyt aus dem Behälter 32 angesaugt wird. Der Elektrolyt dringt dabei in alle Poren der im Inneren der Zelle 1 vorhandenen Schichten ein. Dies wird zusätzlich gefördert, wenn zu diesem Zeitpunkt bereits eine Teilmenge des Leitsalzes in der Zelle (beispielsweise als Ergebnis eines Reinigungsschrittes) vorhanden ist.

## Patentansprüche

1. Verfahren zur Herstellung einer elektrochemischen Batteriezelle, die in einem Gehäuse eine positive Elektrode und eine negative Elektrode aufweist, umfassend einen Verfahrensschritt, bei dem in das Gehäuse eine auf SO₂ basierende Elektrolytlösung mit einem Leitsalz eingefüllt wird, wobei das Einfüllen der Elektrolytlösung folgende Teilschritte einschließt:
- der Innenraum des Gehäuses wird mit gasförmigem SO₂ gefüllt;
- eine Einfüllöffnung des Gehäuses wird gasdicht an ein Gefäß angeschlossen, das die Elektrolytlösung mit einem Anteil an SO₂ enthält, der so bemessen ist, dass das gasförmige SO₂ in der Elektrolytlösung begierig gelöst wird; und
- die Elektrolytlösung wird, getrieben durch den aus dem Lösungsvorgang resultierenden Unterdruck, in das Gehäuse einströmen gelassen.

2. Verfahren nach Anspruch 1, bei welchem das Leitsalz LiAlCl₄ ist und der SO₂-Anteil der Elektrolytlösung höchstens LiAlCl₄ x 3,5 SO₂ entspricht.

3. Verfahren nach einem der vorhergehenden Ansprüche, **dadurch gekennzeichnet, dass** sich eine Teilmenge des Leitsalzes bereits in der Zelle befindet, wenn die Elektrolytlösung in die Zelle eingefüllt wird.

4. Verfahren nach einem der vorhergehenden Ansprüche,
bei welchem
zur Optimierung einer Elektrode Hydroxid-Ionen von deren Oberfläche entfernt werden, wobei
ein Reinigungsmittel, das eine mit Hydroxid-Ionen reagierende erste Reinigungskomponente enthält, derartig mit der Elektrode in Kontakt gebracht wird, dass an ihr gebundene Hydroxid-Ionen durch Reaktion mit der ersten Reinigungskomponente von der Elektrodenoberfläche gelöst werden, und
Bestandteile des Reinigungsmittels oder Reaktionsprodukte, die die Funktion der Zelle stören könnten, von der Elektrode entfernt werden.

5. Verfahren nach Anspruch 4, bei welchem die erste Reinigungskomponente eine protonenfreie Lewis-Säure ist.

6. Verfahren nach Anspruch 5, bei welchem die protonenfreie Lewis-Säure ausgewählt ist aus der Gruppe bestehend aus AlF₃, BF₃, CO₂, CS₂ und GaCl₃.

7. Verfahren nach einem der Ansprüche 4 bis 6, bei welchem die Elektrode eine Insertionselektrode, insbesondere eine Interkalationselektrode ist.

8. Verfahren nach Anspruch 7, bei welchem ein Reinigungsmittel, das eine mit H⁺-Ionen reagierende zweite Reinigungskomponente enthält, derartig mit der Insertionselektrode in Kontakt gebracht wird, daß in ihr gebundene H⁺-Ionen durch Reaktion mit der Komponente aus der Elektrode extrahiert werden.

9. Verfahren nach Anspruch 8, bei welchem die zweite Reinigungskomponente ein Salz ist, das mit H⁺-Ionen, die an der Insertionselektrode gebunden sind, eine Ionenaustauschreaktion eingeht.

10. Verfahren nach Anspruch 9, bei welchem das Salz ein Halogenid, insbesondere ein Fluorid eines Alkalimetalls, eines Erdalkalimetalls oder eines Elementes der dritten Hauptgruppe des Periodensystems, insbesondere LiCl oder LiF ist.

11. Verfahren nach einem der vorhergehenden Ansprüche, bei welchem das aktive Metall ausgewählt ist aus der Gruppe bestehend aus den Alkalimetallen, den Erdalkalimetallen und den Metallen der zweiten Nebengruppe des Periodensystems.

12. Verfahren nach Anspruch 11, **dadurch gekennzeichnet, dass** das aktive Metall Lithium, Natrium, Calcium, Zink oder Aluminium ist.

13. Verfahren nach einem der vorhergehenden Ansprüche, bei welchem die positive Elektrode ein Metalloxid enthält.

14. Verfahren nach einem der vorhergehenden Ansprüche, bei welchem die positive Elektrode eine Interkalationsverbindung enthält.

15. Verfahren nach Anspruch 14, bei welchem die positive Elektrode eine Interkalationsverbindung mit CoO₂ enthält.

## Claims

1. Method for manufacturing an electrochemical battery cell having a positive electrode and a negative electrode in a housing, the method comprising a step in which an SO₂-based electrolyte solution containing a conductive salt is transferred into the housing, the transfer of the electrolyte solution including the following partial steps:
- the interior of the housing is filled with gaseous SO₂;
- a fill opening of the housing is attached in a gas-tight manner to a vessel which contains the electrolyte solution having an SO₂ concentration such that the gaseous SO₂ is readily dissolved in the electrolyte solution; and
- the electrolyte solution is transferred into the housing, driven by the partial vacuum resulting from the dissolving of SO₂ in the solution.

2. Method according to claim 1, wherein the conductive salt is LiAlCl₄ and the SO₂ concentration of the electrolyte solution corresponds to at most LiAlCl₄ x 3.5 SO₂.

3. Method according to any one of the preceding claims, **characterized in that** a partial quantity of the conductive salt is already present in the cell when the electrolyte solution is transferred into the cell.

4. Method according to any one of the preceding claims,
wherein
hydroxide ions are removed from the surface of an electrode for optimization thereof,
a cleaning agent which contains a first cleaning component reacting with hydroxide ions is contacted with the electrode such that hydroxide ions bonded thereto are removed from the electrode surface due to a reaction with the first cleaning component, and
components of the cleaning agent or reaction products which may interfere with the function of the cell are removed from the electrode.

5. Method according to claim 4, wherein the first cleaning component is a proton-free Lewis acid.

6. Method according to claim 5, wherein the proton-free Lewis acid is selected from the group comprising AlF₃, BF₃, CO₂, CS₂ and GaCl₃.

7. Method according to any one of claims 4 to 6, wherein the electrode is an insertion electrode, preferably an intercalation electrode.

8. Method according to claim 7, wherein a cleaning agent which contains a second cleaning component reacting with H⁺ ions, is contacted with the insertion electrode such that H⁺ ions bonded therein are extracted from the electrode due to a reaction with the component.

9. Method according to claim 8, wherein the second cleaning component is a salt which makes an ion exchange reaction with H⁺ ions which are bonded to the insertion electrode.

10. Method according to claim 9, wherein the salt is a halogenide, preferably a fluoride of an alkali metal, an alkaline earth metal, or an element of the third main group of the periodic system, in particular LiCl or LiF.

11. Method according to any one of the preceding claims, wherein the active metal is selected from the group comprising the alkali metals, the alkaline earth metals, and the metals of the second secondary group of the periodic system.

12. Method according to claim 11, **characterized in that** active metal is lithium, sodium, calcium, zinc, or aluminum.

13. Method according to any one of the preceding claims, wherein the positive electrode contains a metal oxide.

14. Method according to any one of the preceding claims, wherein the positive electrode contains an intercalation compound.

15. Method according to claim 14, wherein the positive electrode contains an intercalation compound comprising CoO₂.

## Revendications

1. Procédé pour la production d'un élément de batterie électrochimique, qui présente, dans un boîtier, une électrode positive et une électrode négative, comprenant une étape de procédé, dans laquelle une solution électrolytique à base de SO₂ est introduite dans le boîtier avec un sel conducteur, l'introduction de la solution électrolytique comprenant les étapes partielles suivantes :
- l'espace interne du boîtier est rempli de SO₂ gazeux ;
- une ouverture d'introduction du boîtier est raccordée de manière étanche aux gaz à un récipient qui contient la solution électrolytique avec une proportion de SO₂ qui est calculée de manière telle que le SO₂ gazeux est rapidement dissous dans la solution électrolytique ; et
- on laisse s'écouler la solution électrolytique dans le boîtier, poussée par la dépression résultant du processus de dissolution.

2. Procédé selon la revendication 1, dans lequel le sel conducteur est LiAlCl₄ et la proportion de SO₂ de la solution électrolytique correspond au maximum à LiAlCl₄ x 3,5 SO₂.

3. Procédé selon l'une quelconque des revendications précédentes, **caractérisé en ce qu'**une quantité partielle du sel conducteur se trouve déjà dans l'élément lorsque la solution électrolytique est introduite dans la cellule.

4. Procédé selon l'une quelconque des revendications précédentes, dans lequel, en vue de l'optimisation d'une électrode, les ions d'hydroxyde sont écartés de sa surface
un agent de nettoyage, qui contient un premier composant de nettoyage réagissant avec les ions d'hydroxyde étant mis en contact avec l'électrode de manière telle que les ions d'hydroxyde qui y sont liés sont détachés de la surface de l'électrode par réaction avec le premier composant de nettoyage, et les constituants de l'agent de nettoyage ou les produits de réaction, qui pourraient perturber le fonctionnement de l'élément, sont éliminés de l'électrode.

5. Procédé selon la revendication 4, dans lequel le premier composant de nettoyage est un acide de Lewis exempt de protons.

6. Procédé selon la revendication 5, dans lequel l'acide de Lewis exempt de protons est choisi dans le groupe constitué par AlF₃, BF₃, CO₂, CS₂ et GaCl₃.

7. Procédé selon l'une quelconque des revendications 4 à 6, dans lequel l'électrode est une électrode d'insertion, en particulier une électrode d'intercalation.

8. Procédé selon la revendication 7, dans lequel un agent de nettoyage qui contient un deuxième composant de nettoyage réagissant avec les ions H⁺ est mis en contact avec l'électrode d'insertion de manière telle que les ions H⁺ qui sont liés dans celle-ci sont extraits de l'électrode par réaction avec le composant.

9. Procédé selon la revendication 8, dans lequel le deuxième composant de nettoyage est un sel qui entre en réaction d'échange ionique avec les ions H⁺ qui sont liés à l'électrode d'insertion.

10. Procédé selon la revendication 9, dans lequel le sel est un halogénure, en particulier un fluorure d'un métal alcalin, d'un métal alcalino-terreux ou d'un élément du troisième groupe principal du système périodique, en particulier LiCl ou LiF.

11. Procédé selon l'une quelconque des revendications précédentes, dans lequel le métal actif est choisi dans le groupe constitué par les métaux alcalins, les métaux alcalino-terreux et les métaux du deuxième groupe secondaire du système périodique.

12. Procédé selon la revendication 11, **caractérisé en ce que** le métal actif est le lithium, le sodium, le calcium, le zinc ou l'aluminium.

13. Procédé selon l'une quelconque des revendications précédentes, dans lequel l'électrode positive contient un oxyde de métal.

14. Procédé selon l'une quelconque des revendications précédentes, dans lequel l'électrode positive contient un composé d'intercalation.

15. Procédé selon la revendication 14, dans lequel l'électrode positive contient un composé d'intercalation avec du CoO₂.
